# EUROPÄISCHE PATENTANMELDUNG

(11) **EP 3 476 212 A1**
(43) Veröffentlichungstag der Anmeldung: **01.05.2019**
(21) Anmeldenummer: 18184542.1
(22) Anmeldetag: 19.07.2018
(51) Int. Cl.: A01K 1/02, B60R 9/06, A01K 1/035, B60R 3/00

(54) **AUTO-EINSTIEGSHILFE FÜR HUNDE**

(30) Priorität: 26.10.2017 DE 202017106498 U; 21.02.2018 DE 202018100968 U
(71) Anmelder: Ruisinger, Herta, 86684 Holzheim/Pessenburgheim (DE); Klaus, Sabine, 47495 Rheinberg (DE)
(72) Erfinder: Ruisinger, Herta, 86684 Holzheim/Pessenburgheim (DE); Klaus, Sabine, 47495 Rheinberg (DE)
(74) Vertreter: Epping - Hermann - Fischer

(57) **Zusammenfassung**

Die Erfindung betrifft eine Auto-Einstiegshilfe (5) für Hunde mit einer Trittfläche (6) und einer Halterung (7) zur Festlegung der Trittfläche (6) an einem Auto (1), wobei die Halterung (7) an der Innenverkleidung oder dem Boden des Kofferraumes des Autos (1) und/oder an einem Verschluss (4a) des Kofferraumes (2) des Autos (1) und/oder an Ösen (14) im Kofferraum (2) des Autos(1) festlegbar ist.

## Beschreibung

Die Erfindung betrifft eine Auto-Einstiegshilfe für Hunde mit einer Trittfläche und einer Halterung zur Festlegung der Trittfläche an einem Auto.

Hunde werden im Auto in der Regel im Kofferraum transportiert. SUV's werden sehr gerne von Hundehaltern gefahren, da sie sehr große Kofferräume haben. SUV's sind auch ein beständig wachsender Markt. Bei den Neuzulassungen ist der Wert bei SUV's von 11% in 2014 auf 23% in 2016 gestiegen.

Insbesondere bei Geländewagen und SUV's liegt der Kofferraumboden relativ hoch über der Straße. Für kleinere Hunde (<15kg) liegt die Ladekante bzw. der Kofferraumboden somit deutlich zu hoch, um diesen mittels eines Sprungs erreichen zu können. Probiert der Hund es dennoch, gibt es erhebliche Verletzungsrisiken, sowohl beim Ein- als auch Aussteigen, durch das Abrutschen an der Kante, Verkanten der Pfoten/Krallen etc. Allerdings ist diese Schwierigkeit nicht zu beheben, indem der Besitzer den Hund einfach ins Auto hebt. Oft ist auch ein kleinerer Hund (<15kg) für den Besitzer noch zu schwer oder der Besitzer ist selber gesundheitlich eingeschränkt oder möchte sich nicht die Kleidung dreckig machen, weil der Hund z.B. nass ist oder im Dreck getobt hat. Auch größere Hunde (>15kg) haben mit der hohen Ladekante Probleme, sofern sie nicht zu den besonders sprungstarken Exemplaren wie z.B. Malinois o.ä. zählen. Gerade Hunde größerer Rassen wie z.B. Golden Retriever, Schäferhund, Berner Sennenhund etc. haben oft Probleme mit Gelenken (HD, ED o.ä.), wodurch sie weder hoch springen können noch sollen. Auch das Rausspringen aus dem hohen Kofferraum ohne Zwischenebene ist eine massive Belastung für die Gelenke dieser Hunde und sollte vermieden werden. Autos mit hohen Ladenkanten sind somit für die Besitzer der meisten Hunde schlichtweg unpraktikabel, selbst wenn die Hunde noch jünger sind.

Im Handel werden zur Lösung des Problems ferner ausziehbare oder ausrollbare mobile Rampen angeboten. Diese erfüllen ihren Zweck, dem Hund das Einsteigen ins Auto zu erleichtern, generell gut. Sie sind jedoch sehr groß und müssen nach dem Einsatz entweder im Kofferraum oder auf der Rückbank des Autos verstaut werden. Auf der Rückbank nehmen sie i.d.R. soviel Platz ein, dass dort keine Personen mehr transportiert werden können. Außerdem verursachen die Rampen dort leicht starke Beschädigungen am Polster und der Verkleidung der Türen. Im Kofferraum beschneiden die ausziehbaren Rampen nicht nur den Platz, welcher dem Hund zur Verfügung steht, sondern müssen zudem noch irgendwie gesichert werden, weil sie sonst in den Kurven von links nach rechts schlittern und das Tier gefährlich verletzen können und beim Bremsen in den Fahrgastraum fliegen.

Aus der DE 20 2011 004 445 U1 ist eine Lösung bekannt, bei welcher eine Trittfläche an der Anhängerkupplung eines Autos festgelegt wird. Da diese Lösung eine Anhängerkupplung des Autos erfordert, ist die in dieser Gebrauchsmusterschrift vorgeschlagene Trittstufenplattform nicht für alle Autos verwendbar.

Eine weitere Lösung wird in der DE 20 2016 002 858 U1 vorgeschlagen, wobei ein zusammenklappbares Rampensystem im Kofferraumboden über Schnellkleber festgelegt wird und für das Ein- und Aussteigen des Hundes das Rampensystem ausgeklappt wird. Dieses System ist für Autos ohne Anhängerkupplung einsetzbar, jedoch erfordert es eine Fixierung des Rampensystems am Kofferraumboden mittels Schnellkleber, was eine irreversible Verbindung bedeutet und beim Wiederverkauf des Autos eine Demontage erschwert. Des Weiteren ist das Rampensystem durch die zusammenklappbaren Elemente relativ voluminös und nimmt dem Hund im Kofferraum viel Platz.

Der Erfindung liegt daher die Aufgabe zugrunde eine Auto-Einstiegshilfe für Hunde aufzuzeigen, welche variabel an nahezu allen Autos einsetzbar und einfach zu verstauen ist.

Erfindungsgemäß wird die Aufgabe dadurch gelöst, dass die Halterung an der Innenverkleidung oder dem Boden des Kofferraumes des Autos und/oder an einem Verschluss des Kofferraumes des Autos und/oder an Ösen im Kofferraum des Autos festlegbar ist.

Vorzugsweise umfasst hierzu die Halterung einen Klett- oder Klebeabschnitt für die Festlegung an der Innenverkleidung oder dem Boden des Kofferraumes des Autos. Ist der Kofferraum mit Teppich ausgelegt, wird ein Klettabschnitt verwendet und ist dieser mit Kunststoff ausgelegt kann ein Klebeabschnitt verwendet werden, der lösbar mit dem Kunststoffboden des Kofferraums verklebt wird. Die Verwendung eines Klett- oder Klebeabschnittes hat den großen Vorteil, dass dieser flächig mit dem Boden des Kofferraumes verbunden werden kann und daher auf diesem Klett- oder Klebeabschnitt eine Box zum Transport des Hundes, wie sie in vielen Ländern Vorschrift ist, gestellt werden kann. Nach Verwendung der Auto-Einstiegshilfe kann diese einfach in den Kofferraum gelegt werden, zum Beispiel in den Bereich neben der Box. Der Klettbeziehungsweise Klebeabschnitt ist extrem dünn, nimmt somit im Kofferraum nahezu keinen Platz ein und ist reversibel mit dem Boden oder des Kofferraumes verbindbar.

Gemäß einer bevorzugten Ausführungsform weist die Halterung Haken oder Karabiner auf und der Klett- oder Klebeabschnitt ein und mehrere Ringe zum Einhängen dieser Haken und Karabiner. Dies hat den großen Vorteil, dass die Auto-Einstiegshilfe bei Benutzung lediglich in die Ringe des Klett- oder Klebeabschnittes eingehängt wird und bei Nichtbenutzung können die Klett- oder Klebeabschnitte auf dem Boden des Kofferraumes verbleiben und die Auto-Einstiegshilfe kann von diesen Abschnitten einfach über Aushängen der Haken und Karabiner aus den Ringen getrennt werden.

Gemäß einer weiteren bevorzugten Ausführungsform ist der Klett- oder Klebeabschnitt als Klebestreifen ausgebildet. Je nach Größe und Gewicht des Hundes kann mittig nur ein Klebestreifen verwendet werden oder bei schwereren Hunden oder schlechterer Haftung des Klett- oder Klebestreifens am Boden des Kofferraumes können auch mehrere Klett- oder Klebestreifen nebeneinander verwendet werden, in deren Ringe die Haken oder Karabiner eingehängt werden können.

Gemäß einer weiteren Ausführungsform ist der Klett- oder Klebeabschnitt als Klebeplatte ausgebildet, welche ebenso einen oder mehrere Ringe zum Einhängen der Haken oder Karabiner aufweist. Die Klett- oder Klebeplatte kann über nahezu dem gesamten Boden des Kofferraums ausgebildet sein und erzielt dadurch eine sehr starke Verbindung mit dem Boden des Kofferraumes, sodass auch Auto-Einstiegshilfen für schwere Hunde an einer Klett- oder Klebeplatte befestigt werden können.

Ein Großteil der Autos weist einen Kofferraum mit Kofferraumklappe auf, welche mit einem Verschluss an der Karosserie und einem Schloss an der Unterseite der Kofferraumklappe verriegelbar ist. Der Verschluss weist hierzu einen U-förmigen Bügel oder einen Dorn auf, in welchen ein Verriegelungselement des Schlosses der Kofferraumklappe hintergreift.

Ein weiterer Aspekt der Erfindung ist, dass die Halterung für die Auto-Einstiegshilfe nicht nur an der Innenverkleidung oder dem Boden des Kofferraumes des Autos festlegbar ist, sondern zusätzlich oder auch alternativ an einem Verschluss des Kofferraums des Autos. Die zusätzliche oder alternative Festlegung am Verschluss des Kofferraumes des Autos hat den Vorteil, dass sehr hohe Belastungen über den U-förmigen Bügel oder Dorn am Verschluss des Kofferraums des Autos aufgenommen werden können. Andererseits hat diese Variante den Nachteil, dass beim Verschließen der Kofferraumklappe jedes Mal die Halterung von dem Verschluss des Kofferraumes wieder getrennt werden muss.

Des Weiteren weisen eine Vielzahl von Autos sogenannte Ösen im Kofferraum auf, welche in der Regel dazu dienen Gepäck im Kofferraum festzuzurren, sodass es bei starken Bremsvorgängen nicht in den Fahrgastraum fliegt.

Ein weiterer Aspekt der Erfindung ist, dass alternativ oder auch zusätzlich die Halterung an diesen Ösen im Kofferraum festlegbar ist. Die Halterung weist hierzu günstigerweise Haken oder Karabiner zum Einhängen in die Ösen auf.

Eine Festlegung an den Ösen im Kofferraum hat den Vorteil, dass diese zum Schließen des Kofferraums nicht gelöst werden müssen, sondern die Auto-Einstiegshilfe lediglich in den Kofferraum gelegt und dann der Kofferraum geschlossen werden kann.

Die Halterung umfasst des weiteren Seile oder Gurte, welche die Trittfläche in der richtigen Position positionieren.

In einer weiteren Ausführungsform wird die Trittfläche über die Seile oder Gurte direkt an den Ösen im Kofferraum oder am U-förmigen Bügel des Verschlusses festgelegt, sodass man auf zusätzliche U-förmigen Bügel und Karabiner verzichten kann.

Die Seile oder Gurte weisen vorzugsweise auch Schnallen auf, welche eine Längeneinstellung der Seile oder Gurte erlauben und somit dazu dienen sowohl die Höhe der Trittfläche auch als auch den Winkel der Trittfläche an das jeweilige Auto und den jeweiligen Hund, welcher die Auto-Einstiegshilfe benutzen soll, anzupassen.

Gemäß einer weiteren bevorzugten Ausführungsform ist die Trittfläche durch mindestens ein Holzbrett, eine Kunststoffplatte oder eine kunststoffbeschichtete Metallplatte gebildet. Die Ausbildung als Kunststoffplatte beziehungsweise kunststoffbeschichtete Metallplatte hat den Vorteil, dass die Trittfläche leicht abgewaschen werden kann und dennoch stabil ist für die Benutzung durch größere Hunde.

Bei der Ausbildung als Metallplatte ist diese günstigerweise aus Aluminium oder Magnesium oder eine Legierung davon gebildet, damit die Auto-Einstiegshilfe sehr leicht und dennoch stabil ist.

Gemäß einer weiteren bevorzugten Ausführungsform ist die Trittfläche klappbar zum Verstauen im Kofferraum oder im Fußraum hinter den Rücksitzen ausgebildet. Da durch die Unterbringung des Hundes im Kofferraum ohnehin wenig Raum zur Verfügung steht, ist es sehr nützlich, wenn die Auto-Einstiegshilfe möglichst wenig Raum im Kofferraum verbraucht oder auch im Fußraum hinter den Vordersitzen verstaut werden kann.

Eine weitere Ausführungsform sieht vor, dass die Trittfläche klappbar mit einer Rückwand verbunden ist. Die Rückwand hat den Vorteil, dass die Auto-Einstiegshilfe sich an der Rückseite des Autos in der Regel an der Stoßstange abstützt und diese somit wesentlich stabiler befestigt ist. Durch die Klappbarkeit der Rückwand bleibt ein geringes Packmaß zum Verstauen im Kofferraum beziehungsweise im Fußraum hinter den Sitzen erhalten.

Eine weitere Ausführungsform sieht vor, dass die Rückwand auf der zur Stoßstange des Autos zeigenden Seite im montierten Zustand mit einer Polsterung versehen ist. Die Polsterung gewährleistet dass die Stoßstange des Autos durch die Rückwand nicht zerkratzt wird, was insbesondere bei lackierten Stoßstangen von großem Vorteil ist. Die Rückwand kann ebenso wie die Trittfläche durch ein Holzbrett, eine Kunststoffplatte oder eine kunststoffbeschichtete Metallplatte gebildet sein.

Gemäß einer alternativen Ausführungsform ist die Trittfläche klappbar mit einem Gestänge verbunden. Das Gestänge nimmt bei dieser Ausführungsform die Funktion der Rückwand wahr.

Eine Weiterbildung sieht vor, dass das Gestänge zumindest zwei senkrechte Stangen aufweist, welche auch die Trittfläche am Boden abstützen. Bei dieser Ausführungsform wird durch die Abstützung der Trittfläche am Boden und an der Rückseite der Stoßstange eine weiter verbesserte Stabilität der Trittfläche erreicht.

Eine Weiterbildung der Erfindung sieht vor, dass die Trittfläche mit einem Abstützbereich verbunden ist, der auf die Unterseite des Kofferraums oder der Stoßstange des Autos im montierten Zustand einwirkt. Durch den Abstützbereich wird eine weitere Stabilisierung der Trittfläche erreicht.

Vorzugsweise ist der Abstützbereich als Verlängerung der Trittfläche oder durch eine aus der Trittfläche ausziehbaren Platte oder ausziehbaren Streben gebildet. Hierdurch ist gewährleistet, dass die Auto-Einstiegshilfe immer noch zusammengeklappt werden kann und ein geringes Packmaß für das Verstauen im Kofferraum beziehungsweise im Fußraum hinter den Sitzen aufweist.

Eine weitere Ausbildung sieht vor, dass an der Vorderseite der Trittfläche eine schwenkbare Bodenabstützung angeordnet ist. Bei einer sehr langgestreckten Trittfläche wirken insbesondere bei schweren Hunden große Biegemomente auf die Trittfläche. Durch die Bodenabstützung an der Vorderseite der Trittfläche wird diese deutlich stabilisiert. Um die Autoeinstiegseinhilfe dennoch platzsparend im Kofferraum unterzubringen ist die Bodenabstützung an der Vorderseite schwenkbar angeordnet, sodass unter die Trittfläche geklappt werden kannAuto-Einstiegshilfe.

Weitere Vorteile der Erfindung sind in der nachfolgenden Figurenbeschreibung sowie in den Ansprüchen offenbart. In den Figuren zeigen
Figur 1 eine Schrägansicht einer ersten Ausführungsform,
Figur 2 eine Seitenansicht der ersten Ausführungsform,
Figur 3 eine Schrägansicht einer zweiten Ausführungsform mit Gestänge,
Figur 4 eine Seitenansicht der zweiten Ausführungsform,
Figur 5A eine dritte Ausführungsform mit klappbarer Trittfläche,
Figur 5B die dritte Ausführungsform im zusammengeklappten Zustand,
Figur 6 eine vierte Ausführungsform in Schrägansicht,
Figur 7 die vierte Ausführungsform in Seitenansicht,
Figur 8 die Ausführungsform gemäß Figur 1 mit Befestigung der Auto-Einstiegshilfe über einen Klett- oder Klebestreifen,
Figur 9 die Ausführungsform gemäß Figur 3 mit Befestigung der Auto-Einstiegshilfe über zwei Klett- oder Klebestreifen und
Figur 10 die Ausführungsform gemäß Figur 1 mit Befestigung der Auto-Einstiegshilfe über eine Klett- oder Klebeplatte.

Nachfolgend werden figurenbeschreibend Elemente gleicher Konstruktion und Funktion mit den gleichen Bezugszeichen versehen und nicht gesondert erläutert.

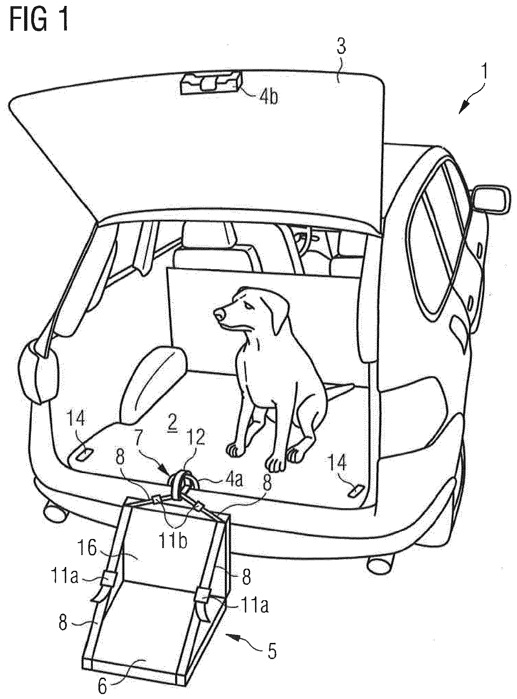

Figur 1 zeigt ein Auto 1 in schräger Ansicht von hinten. Im dargestellten Ausführungsbeispiel ist das Auto 1 ein Geländewagen oder ein sogenannter SUV mit einem Kofferraum 2, der über eine Kofferraumklappe 3 verschlossen werden kann und somit genügend Raum aufweist, um einen Hund zu transportieren. Wie eingangs beschrieben, ist es jedoch für manche Hunde schwer die Höhe vom Boden bis zum Kofferraum 2 zu überwinden. Dies gilt insbesondere für Geländewagen und SUV's, da hier der Boden des Kofferraums 2 wesentlich höher angeordnet ist wie bei Kombis oder Transportern. Jeder Kofferraum 2 kann in der Regel über einen Verschluss 4a in Form eines U-förmigen Bügel s oder eines Dorns und einem Schloss 4b, welches üblicherweise in der Kofferraumklappe 3 integriert ist, verschlossen werden. Um dem Hund das Einsteigen beziehungsweise das Aussteigen aus dem Kofferraum 2 zu erleichtern, kann eine Auto-Einstiegshilfe 5 am Verschluss 4a eingehängt werden. Die Auto-Einstiegshilfe 5 weist eine Trittfläche 6 auf, welche über eine Halterung 7 am U-förmigen Bügel 4a befestigt werden kann. Im gezeigten Ausführungsbeispiel umfasst die Halterung 7 Gurte 8 und einen Karabiner 12, welcher an den Gurten 8 befestigt ist und welcher wiederum in den U-förmigen Bügel 4a des Kofferraums 2 eingeklickt werden kann. Des Weiteren weist die Auto-Einstiegshilfe eine Rückwand 16 auf, welche sich im montierten Zustand an der rückwärtigen Stoßstange abstützt und somit der Auto-Einstiegshilfe 5 eine gewisse Stabilität verleiht. Die Rückwand 16 ist mit der Trittfläche 6 zusammenklappbar, das heißt über ein Scharnier verbunden, sodass nach Benutzung der Auto-Einstiegshilfe 5 lediglich der Karabiner 12 vom U-förmigen Bügel 4a ausgehängt werden muss und die Auto-Einstiegshilfe 5 zusammengeklappt und im Kofferraum oder im Fußraum hinter den Rücksitzen verstaut werden kann. Zur Einstellung beziehungsweise zur Anpassung der Auto-Einstiegshilfe 5 an die verschiedenen Autotypen sind in den Gurten 8 Schnallen 11a (zwischen Trittfläche 6 und Rückwand 16 und 11b (zwischen Rückwand 16 und Karabiner 12) integriert, welche zum einen die Einstellung der Höhe der Trittfläche 6 sowie des Winkels der Trittfläche 6 relativ zur Rückwand 16 erlaubt, sodass die Auto-Einstiegshilfe 5 in der gewünschten Höhe positioniert werden kann und die Trittfläche 6 möglichst waagrecht angeordnet ist.

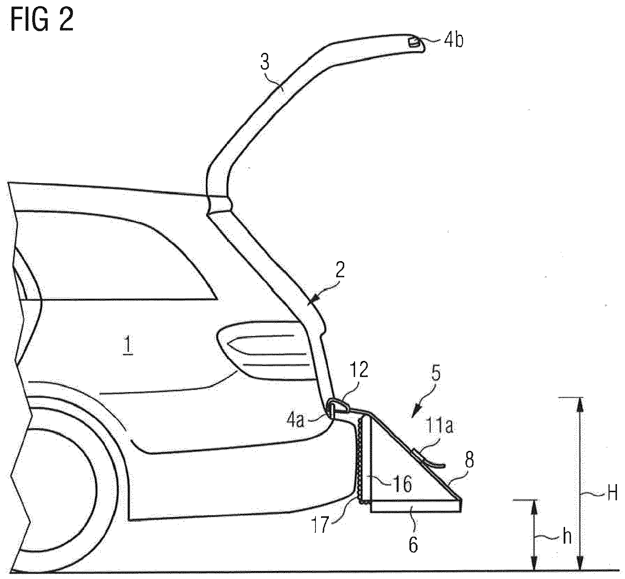

Figur 2 zeigt die Ausführungsform gemäß Figur 1 in Seitenansicht. Zum Einstieg in den Kofferraum 2 muss ein Hund die Höhe H überwinden. Durch die Auto-Einstiegshilfe 5 wird eine Stufe in der Höhe h, welche in der Regel idealerweise bei der Hälfte der Größe H angeordnet ist, positioniert. Die Trittfläche 6 ist nahezu waagrecht angeordnet und die Auto-Einstiegshilfe 5 wird über den Karabiner 12 im U-förmigen Bügel 4a des Kofferraums eingehängt und stützt sich mit der Rückwand 16 an der Stoßstange des Autos 1 ab. Um ein Verkratzen der Rückseite beziehungsweise Stoßstange des Autos 1 zu vermeiden, ist an der Rückwand 16 eine Polsterung 17 vorgesehen. Die Trittfläche 6 sowie die Rückwand 16 können als Holzbrett oder als Kunststoffplatte oder als kunststoffbeschichtete Metallplatte mit abgekanteten Seiten ausgebildet sein. Die Ausbildung als Kunststoffplatte beziehungsweise kunststoffbeschichtete Metallplatte mit abgekanteten Seiten hat den Vorteil, dass die Auto-Einstiegshilfe leicht mit Wasser zu reinigen ist, was insbesondere nach der Benutzung an regnerischen Tagen von großem Vorteil ist.

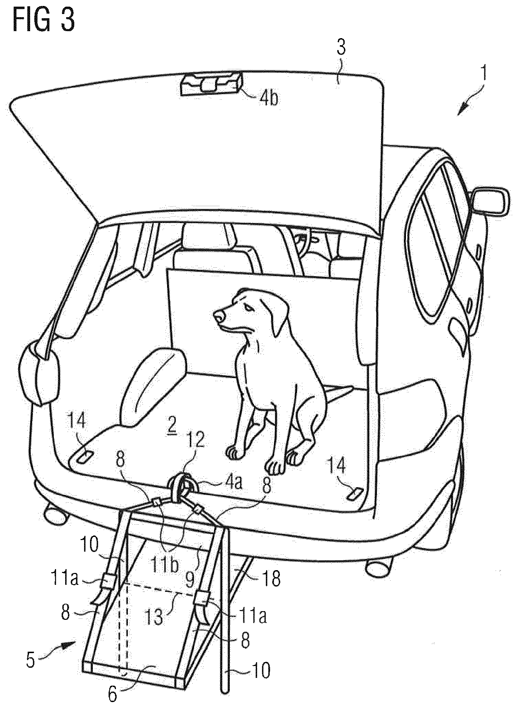

Figur 3 zeigt eine zweite Ausführungsform der Auto-Einstiegshilfe 5 an einem Auto 1 in der schrägen Ansicht von hinten. Bei dieser Ausführungsform ist die Rückwand durch Stangen 9 und 10 gebildet, wobei zwei Stangen 10 senkrecht angeordnet und eine Stange 9 die beiden senkrechten Stangen oben waagrecht verbindet. Die Stangen 10, welche vertikal angeordnet sind, sind mit der Trittfläche 6 schwenkbar um eine Achse 13 verbunden. Im oberen Bereich werden die Stangen über eine waagrechte Stange 9 miteinander verbunden. Die waagrechte Stange 9 ist wiederum mit Gurten 8 verbunden, an welchen ein Karabiner 12 festgelegt ist, der in den U-förmigen Bügel 4a des Kofferraums 2 eingehängt werden kann. Im dargestellten Ausführungsbeispiel ist die Trittfläche 6 über einen Abstützbereich 18 nach hinten verlängert. Dies hat den Vorteil, dass bei der Belastung der Trittfläche 6 durch den Hund das entstehende Moment um die Achse 13 durch die Abstützfläche 18 aufgefangen wird und die Trittfläche 6 dadurch sehr stabil ist.

Des Weiteren gehen die senkrechten Stangen 10 im dargestellten Ausführungsbeispiel bis zum Boden und erlauben eine Abstützung der Trittfläche 6 am Boden. Die Gurte zwischen den senkrechten Stangen 10 und der Trittfläche 6 sind seitlich angeordnet, sodass der vordere Bereich der Trittfläche 6 frei ausragend ausgebildet ist und durch den Hund ungehindert benutzt werden kann.

Nach Gebrauch kann die Auto-Einstiegshilfe 5 wie ein Klappstuhl um die Achse 13 zusammengeklappt werden.

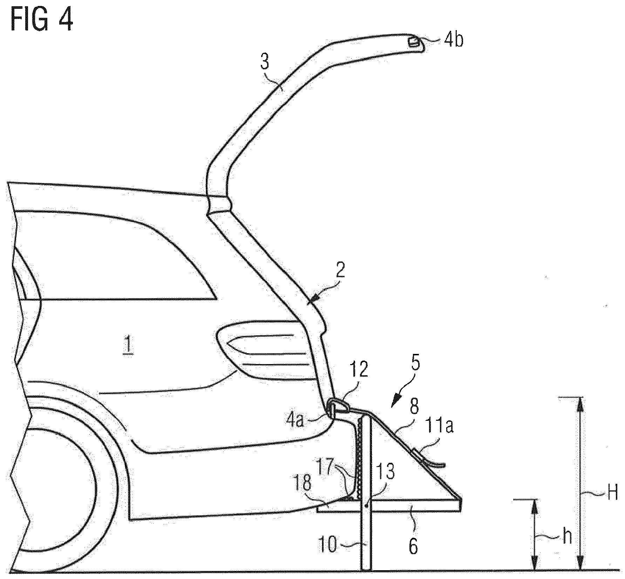

Die Figur 4 zeigt die Auto-Einstiegshilfe 5 gemäß Figur 3 in Seitenansicht. In Figur 4 ist gut zu sehen, dass die senkrechten Stangen 10 die Auto-Einstiegshilfe 5 gegenüber dem Boden abstützen und die Trittfläche 6 längs der senkrechten Stangen mit dem Abstützbereich 18 verlängert ist um ein entstehendes Drehmoment bei Belastung der Trittfläche 6 aufzufangen. Sowohl die Rückseite der senkrechten Stangen 10 sowie der Abstützbereich 18 an der Oberseite ist mit einer Polsterung 17 versehen, um eine Beschädigung des Fahrzeugs zu vermeiden.

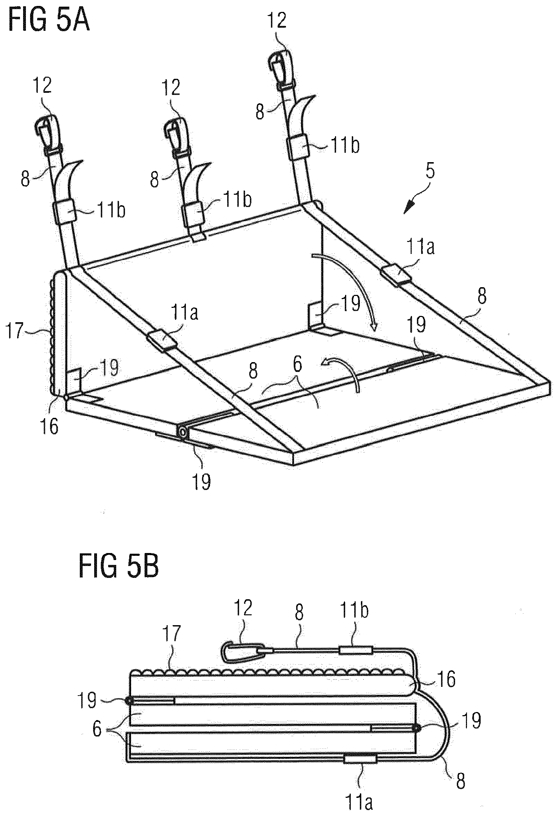

Figur 5A zeigt eine weitere Ausführungsform, wobei gemäß der in Figur 5A gezeigten Ausführungsform die Trittfläche 6 zweigeteilt ist und über Scharniere 19 miteinander verbunden ist. Der vordere Teil der Trittfläche 6 kann somit zum Verstauen der Auto-Einstiegshilfe 5 im Kofferraum auf den hinteren Teil der Trittfläche 6 geklappt werden. Ebenso ist die Rückwand 16 über Scharniere 19 mit der Trittfläche 6 verbunden, sodass auch diese auf die Trittfläche 6 zum Verstauen geklappt werden kann. Des Weiteren sind gemäß der Ausführungsform gemäß Figur 5A seitlich an der Rückwand 16 zwei Gurte 8 mit jeweiligen Karabinern 12 vorgesehen, welche in sogenannte Ösen 14 im Auto eingehängt werden können. Die Ösen 14 sind in vielen Autos im Kofferraum 2 vorgesehen und dienen prinzipiell zum Verzurren von im Kofferraum verstautem Gepäck. Hängt man die Auto-Einstiegshilfe 5 in diese Ösen 14 ein, kann diese nach Benutzung schnell zusammengeklappt und im Kofferraum verstaut werden. Ein Aushängen dieser Karabiner in den Ösen 14 ist nicht zwingend notwendig. Zusätzlich ist auch ein Karabiner 12 vorgesehen, um die Auto-Einstiegshilfe auch mittig am U-förmigen Bügel 4a des Kofferraumverschlusses zu befestigen.

Figur 5B zeigt die Auto-Einstiegshilfe 5 in der Ausführungsform gemäß Figur 5A in der Seitenansicht und im zusammengeklappten Zustand. Um die Auto-Einstiegshilfe 5 zusammen zu klappen wird lediglich die Rückwand 16 über die Scharniere 19 auf die Trittfläche 6 geklappt. Der vordere Teil der zweigeteilten Trittfläche 6 wird ebenfalls über die Scharniere 19 um 180° auf die Unterseite des hinteren Teiles der Trittfläche 6 geschwenkt. Da die Gurte 8 an der Vorderkante der Trittfläche 6 und an der Oberkante der Rückwand 16 befestigt sind, umgeben diese Gurte 8 die zusammengeklappten Trittflächen 6. Die Gurte 8, an welchen die Karabiner 12 zum Einhängen der Auto-Einstiegshilfe 5 am Verschluss 4a des Kofferraums oder an den Ösen 16 im Kofferraum dienen, werden auf die mit der Polsterung 17 versehene Rückseite der Rückwand 16 gelegt. Die Auto-Einstiegshilfe 5 ist zusammengeklappt sehr kompakt und kann dadurch leicht im Auto verstaut werden.

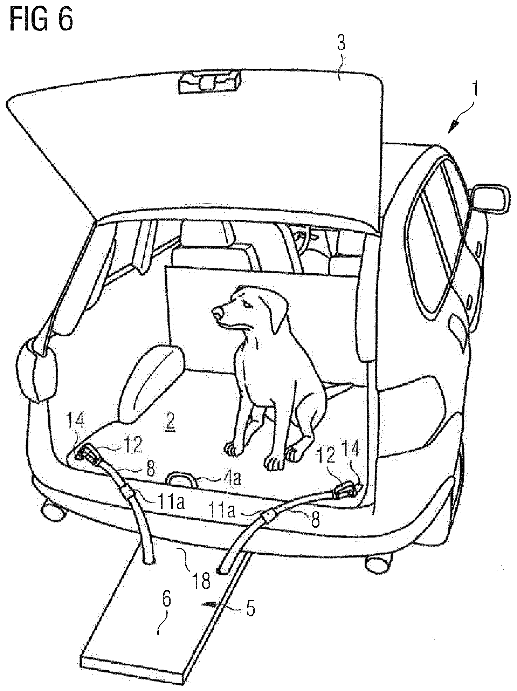

Figur 6 zeigt eine weitere Ausführungsform, wobei bei dieser Ausführungsform die Trittfläche 6 lediglich über zwei Gurte 8 an den Ösen 14 im Kofferraum 2 eines Autos 1 festgelegt wird. Die Trittfläche 6 ist wiederum als Brett oder abgekantete Metallplatte oder abgekantete Kunststoffplatte ausgebildet und weist auch einen Abstützbereich 18 auf, welcher auf die Unterseite des Kofferraums 2 beziehungsweise der Stoßstange wirkt.

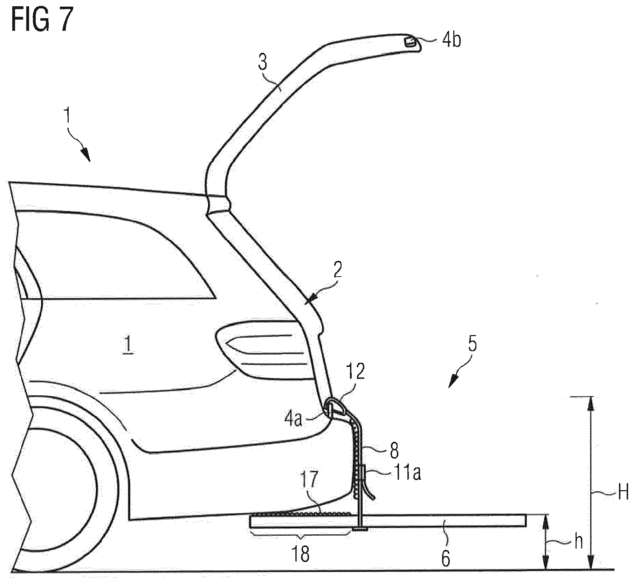

In Figur 7 ist diese Ausführungsform in Seitenansicht dargestellt. Durch diese Ausbildung lässt sich nur eine Trittfläche 6 in einer Höhe h erzielen, welche auf der Unterseite des Kofferraumbodens liegt. Für viele Autos, insbesondere für Geländewagen mit viel Bodenfreiheit ist dies ausreichend und die Ausführungsform ist sehr einfach in dem Aufbau. In einer nicht dargestellten Ausführungsform ist die Trittfläche 6 in der Länge und/oder in der Breite zusammenklappbar, sodass auch diese Auto-Einstiegshilfe 5 leicht im Kofferraum verstaut werden kann.

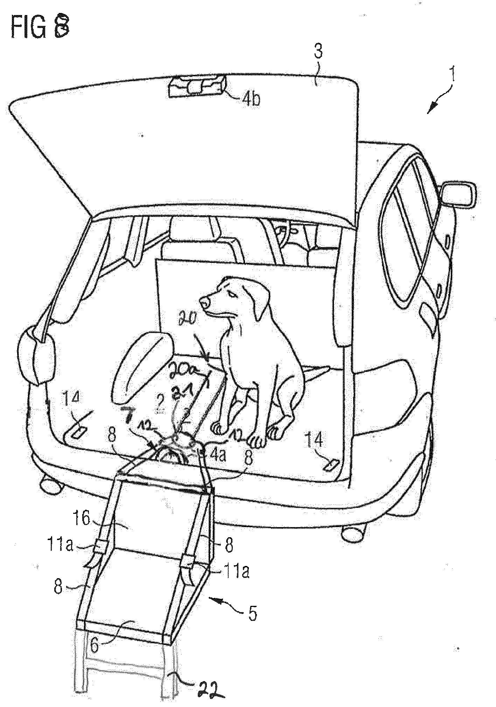

Figur 8 zeigt die Auto-Einstiegshilfe in der Ausführungsform gemäß Figur 1, wobei die Halterung 7 bei dieser Ausführungsform über einen Klett- oder Klebeabschnitt 20 in Form eines Kltt- oder Klebestreifens 20a am Boden des Kofferraumes festgelegt ist. Ist der Kofferraum mit Teppich ausgekleidet, wird ein Klettstreifen 20a verwendet, ist der Kofferraum hingegen mit einer Kunststoffauskleidung versehen, wird ein Klebestreifen 20a verwendet, welcher reversibel mit dem Boden des Kofferraumes verklebt wird. Nicht gezeigte Ausführungsformen ermöglichen auch das Festlegen der Klett- oder Klebestreifen 20a an anderen Stellen der Innenverkleidung des Kofferraums, sowie zum Beispiel den seitlichen Wänden. Der Klett- oder Klebestreifen 20a weist einen Ring oder Lasche 21 auf, in welchen die Haken oder Karabiner 12 der Halterung 7 eingehängt werden können. Die Auto-Einstiegshilfe 5 ist gemäß dieser Ausführungsform nur über den Klett- oder Klebestreifen 20a am Boden des Kofferraumes festgelegt. Nach dem Einsteigen kann diese somit einfach in den Kofferraum gelegt werden ohne das, wie bei der Ausführungsform gemäß Figur 1, ein Aushängen der Haken oder Karabiner 12 aus dem Verschluss 4a des Kofferraumes notwendig ist. Die Auto-Einstiegshilfe 5 der Ausführungsform gemäß Figur 8 weist des Weiteren an der Frontseite der Trittfläche 6 eine Bodenabstützung 22 auf, welche bewirkt, dass bei Benutzung der Auto-Einstiegshilfe 5 durch schwere Hunde die Trittfläche 6 an der Vorderseite nicht nach unten gebogen wird, sondern durch die Bodenabstützung 22 zusätzlich stabilisiert wird. Die Bodenabstützung 22 ist schwenkbar mit der Unterseite der Trittfläche 6 verbunden, sodass nach Benutzung die Auto-Einstiegshilfe 5 komplett zusammengeklappt und in den Kofferraum gelegt werden kann.

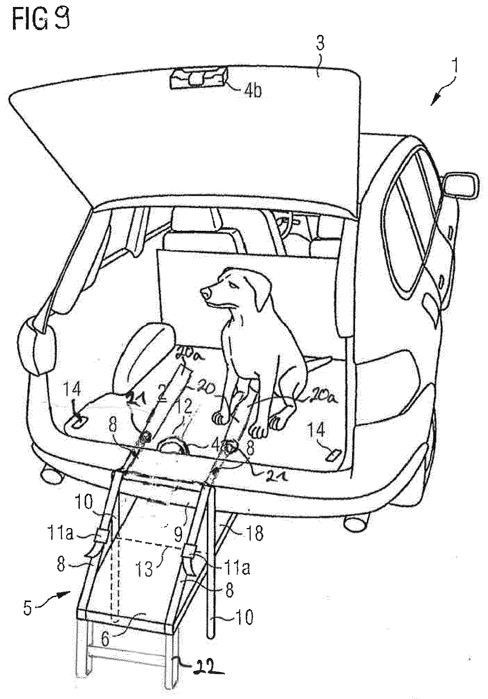

Figur 9 zeigt eine Alternative zur Ausführungsform gemäß Figur 3, wobei gemäß Figur 9 die Auto-Einstiegshilfe über zwei Klett- oder Klebestreifen 20a am Boden des Kofferraums festgelegt ist. Auf eine Befestigung am Verschluss 4a kann verzichtet werden, da ebenso durch die Bodenabstützung 22, wie zu Figur 8 beschrieben, den Stangen 10, welche eine weitere Bodenabstützung gewährleisten, genügend Stabilität erreicht wird und ohnehin keine hohe Zugbelastung auf die Klettstreifen 20a entfällt. Die Klettstreifen 20a weisen wiederum, wie bereits zur Figur 8 beschrieben, Ringe oder Laschen 21 auf, in welche die Haken bzw. Karabiner 12 eingehängt werden können.

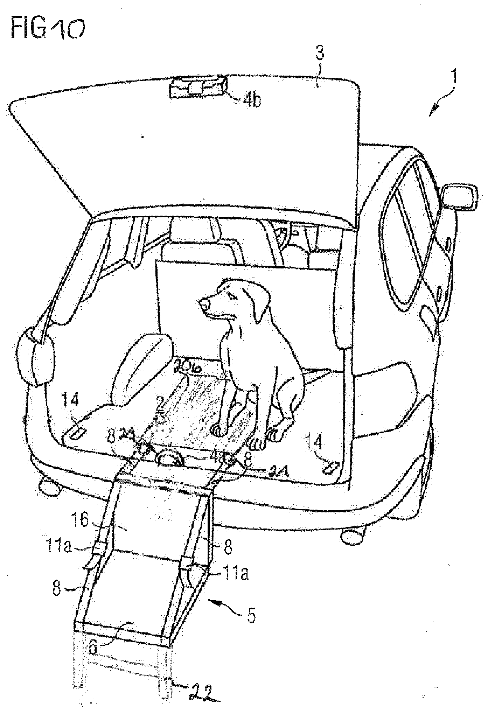

Figur 10 zeigt eine weitere Ausführungsform der Erfindung, wobei bei dieser Ausführungsform die Festlegung der Auto-Einstiegshilfe an einer Klett- oder Klebeplatte 20b am Boden des Kofferraumes 2 erfolgt. Die Klett- oder Klebeplatte 20b weist wiederum Ringe 21 auf, in welche die Haken oder Karabiner 12 der Auto-Einstiegshilfe lediglich eingehängt werden. Auch bei dieser Ausführungsform ist frontseitig an der Trittfläche 6, wie zu Figur 8 beschrieben, eine schwenkbare Bodenabstützung 22 angebracht um zusätzliche Stabilität zu erzielen.

In einer nicht dargestellten Ausführungsform kann auf die Gurte 8 zwischen der Rückwand 16 und der Trittfläche 6 verzichtet werden, wenn die Bodenabstützung 22 zum Einsatz kommt.

Die Erfindung ist nicht auf die dargestellten Ausführungsformen beschränkt. Insbesondere sind auch Ausführungsformen umfasst, bei welchem die Rückwand mehrteilig und klappbar ausgebildet ist oder bei welchem die Stangen in der Ausführungsform gemäß Figur 3 und 4 ausziehbar ausgestaltet sind, um einen möglichst geringen Platzverbrauch bei der Lagerung im Kofferraum zu erzielen. Ebenfalls sind Ausführungsformen umfasst, bei welchem die Trittfläche mit dem Abstützbereich ausziehbar ausgestaltet ist.

### Bezugszeichenliste

- 1: Auto
- 2: Kofferraum
- 3: Kofferraumklappe
- 4a: Verschluss, U-förmigen Bügel
- 4b: Schloss
- 5: Auto-Einstiegshilfe
- 6: Trittfläche
- 7: Halterung
- 8: Gurte
- 9: waagrechte Stange
- 10: senkrechte Stange
- 11a: Schnallen
- 11b: Schnallen
- 12: Haken oder Karabiner
- 13: Achse
- 14: Ösen
- 15: U-förmigen Bügel des Kofferraumverschlusses
- 16: Rückwand
- 17: Polsterung
- 18: Abstützbereich
- 19: Scharniere
- 20: Klett- oder Klebeabschnitt
- 20a: Klett- oder Klebestreifen
- 20b: Klett- oder Klebeplatte
- 21: Ring oder Lasche
- 22: Bodenabstützung

## Patentansprüche

1. Auto-Einstiegshilfe (5) für Hunde mit einer Trittfläche (6) und einer Halterung (7) zur Festlegung der Trittfläche (6) an einem Auto (1)
**dadurch gekennzeichnet, dass**
die Halterung (7) an der Innenverkleidung oder dem Boden des Kofferraumes des Autos (1) und/oder an einem Verschluss (4a) des Kofferraumes (2) des Autos (1) und/oder an Ösen (14) im Kofferraum (2) des Autos(1) festlegbar ist.

2. Auto-Einstiegshilfe (5) nach Anspruch 1,
**dadurch gekennzeichnet, dass** die Halterung (7) einen Klett- oder Klebeabschnitt (20) umfasst.

3. Auto-Einstiegshilfe (5) nach Anspruch 1 oder 2,
**dadurch gekennzeichnet, dass**
die Halterung (7) einen Haken oder Karabiner (12) aufweist.

4. Auto-Einstiegshilfe (5) nach Anspruch 2,
**dadurch gekennzeichnet, dass** der Klett- oder Klebeabschnitt (20) einen oder mehrere Ringe (21) zum Einhängen der Haken oder Karabiner (12) aufweist.

5. Auto-Einstiegshilfe (5) nach Anspruch 2,
**dadurch gekennzeichnet, dass** Klett- oder Klebeabschnitt (20) als Klett- oder Klebestreifen (20a) oder als Klett- oder Klebeplatte (20b) ausgebildet ist.

6. Auto-Einstiegshilfe (5) nach einem der Ansprüche 1 bis 5,
**dadurch gekennzeichnet, dass**
die Halterung (7) Seile oder Gurte (8) umfasst.

7. Auto-Einstiegshilfe (5) nach Anspruch 6,
**dadurch gekennzeichnet, dass**
die Seile oder Gurte (8) Schnallen (11a, 11b)) aufweisen und in der Länge zur Einstellung der Höhe und des Winkels der Trittfläche (6) einstellbar sind.

8. Auto-Einstiegshilfe (5) nach einem der vorhergehenden Ansprüche,
**dadurch gekennzeichnet, dass**
die Trittfläche (6) durch mindestens ein Brett oder Kunststoffplatte oder eine kunststoffbeschichteten Metallplatte (10) gebildet ist.

9. Auto-Einstiegshilfe (5) nach Anspruch 8,
**dadurch gekennzeichnet, dass** die Metallplatte (10) aus Aluminium oder Magnesium oder aus einer Legierung mit einem der beiden Stoffe hergestellt ist.

10. Auto-Einstiegshilfe (5) nach einem der Ansprüche 8 oder 9,
**dadurch gekennzeichnet, dass**
die Trittfläche (6) zum Verstauen im Kofferraum (2) zusammengeklappt werden kann.

11. Auto-Einstiegshilfe (5) nach einem der Ansprüche 1 bis 10,
**dadurch gekennzeichnet, dass**
mit der Trittfläche (6) klappbar eine Rückwand (16) verbunden ist.

12. Auto-Einstiegshilfe (5) nach Anspruch 11,
**dadurch gekennzeichnet, dass**
die Rückwand (16) durch ein Brett, eine Kunststoffplatte oder eine kunststoffbeschichtete Metallplatte (10) gebildet ist.

13. Auto-Einstiegshilfe (5) nach einem der Ansprüche 11 oder 12,
**dadurch gekennzeichnet, dass**
die Rückwand (16) auf der im montierten Zustand zur Stoßstange des Autos zeigenden Seite mit einer Polsterung (17) versehen ist.

14. Auto-Einstiegshilfe (5) nach einem der vorhergehenden Ansprüche,
**dadurch gekennzeichnet, dass**
die Trittfläche (6) klapp- beziehungsweise schwenkbar mit Stangen (18) verbunden ist, welche eine Abstützung der Trittfläche (6) am Auto und/oder dem Boden erlauben.

15. Auto-Einstiegshilfe (5) nach einem der vorhergehenden Ansprüche,
**dadurch gekennzeichnet, dass** an der Vorderseite der Trittfläche (6) eine schwenkbare Bodenabstützung (22) angeordnet ist.
